Europäisches Patentamt

European Patent Office

Office européen des brevets

(19)

(11) Publication number: **O 038 824**
**B1**

# EUROPEAN PATENT SPECIFICATION

(45) Date of publication of patent specification: **13.06.84**

(51) Int. Cl.³: **G 01 M 3/26**

(21) Application number: **80902070.4**

(22) Date of filing: **29.10.80**

(86) International application number:
**PCT/SE80/00263**

(87) International publication number:
**WO 81/01333 14.05.81 Gazette 81/12**

(54) METHOD FOR TESTING THE FLUID TIGHTNESS OF A TEST OBJECT.

(30) Priority: **30.10.79 SE 7908990**

(43) Date of publication of application:
**04.11.81 Bulletin 81/44**

(45) Publication of the grant of the patent:
**13.06.84 Bulletin 84/24**

(84) Designated Contracting States:
**AT CH DE FR GB LI LU NL**

(56) References cited:
**DE - A - 1 750 362**
**SE - B - 386 271**
**US - A - 3 504 528**
**US - A - 3 791 197**
**US - A - 3 839 900**

(73) Proprietor: **NOLEK SYSTEM AB**
**Segersbyvägen 4**
**S-145 63 Norsborg (SE)**

(72) Inventor: **BERGSTRAND, Gunnar**
**Norrskogsvägen 128**
**S-145 72 Norsborg (SE)**

(74) Representative: **Modin, Jan et al,**
**c/o Axel Ehrners Patentbyra AB Box 5342**
**S-102 46 Stockholm (SE)**

Courier Press, Leamington Spa, England.

## Description

The invention relates to a method for testing whether or not a test object is fluid tight by comparative measurements between a test chamber and a reference chamber.

The method according to the invention is especially useful for testing the fluid tightness of a test object having an internal cavity or chamber which has to be gas tight with respect to the environment. As examples hereof, ignition tubes and wrist watches can be mentioned. A method frequently used is to test the fluid tightness of such test objects by submerging them into a liquid, whereupon a negative pressure is applied over the liquid surface and, in case of a minor leakage, gas bubbles rise to the surface. However, large leaks cannot be discovered by this method, since the chambers or cavities of the test object will be filled with liquid immediately.

In a method known from US—A— 3 504 528, the testing of the fluid tightness of a test object by comparative measurements between a test chamber, containing said test object or a part thereof, and a test chamber is carried out in two steps, wherein in a first step the presence or absence of a large leak is detected by transferring predetermined gas quantities to the test chamber and the reference chamber, and by determining whether or not a pressure change occurs arising from said large leak, and wherein in a second step the presence or absence of a minor leak is detected by differential pressure measurements between the two chambers over a predetermined time period. Thus, by such a method, even a large leak can be detected.

However, the latter known method requires the measurement of the absolute pressure in the system upon transferring the gas quantities to the test and reference chambers in the first step, since the gas is transferred from a common chamber, denoted gross-leak or charge chamber. Such absolute pressure measurement is much less accurate than relative measurement.

Accordingly, the object of the present invention is to modify the latter method in such a way that relative pressure measurement, in particular differential pressure measurement, can be carrier out during the first step so as to increase the reliability of the method and to reduce the necessary time for each measuring cycle.

According to the invention the method for tightness testing is characterized in that the first step comprises simultaneously transferring corresponding gas quantities between, on the one hand, a first gas supply and the test chamber and, on the other hand, a separate second gas supply and the reference chamber, and detecting any large leak by momentary differential pressure measurement between the two chambers.

In this connection, "transferring" a predetermined quantity of gas means "delivering to" or "exhausting from", i.e. it is possible to operate with either a positive or a negative pressure relative to the atmospheric pressure. The simplest way to obtain a "predetermined" quantity of gas is to enclose gas (e.g. air) under a certain pressure in a container having a well-defined volume and then connect the container to the test chamber, so that the pressures are equalized. Provided that the container and the test chamber have volumes of the same order, the resulting gas pressure will constitute a certain positive or negative pressure, the size of which indicates whether or not the test chamber leaks. In case of a large leak, the test chamber appears larger and, consequently, the positive pressure will be lower or the negative pressure higher, respectively. The predetermined quantity of gas may alternatively be obtained by means of a piston-cylinder unit having a well-defined piston stroke. In any case, when there is a large leak, the pressures in the test chamber and the reference chamber will be different, causing a differential pressure sensor to react accordingly.

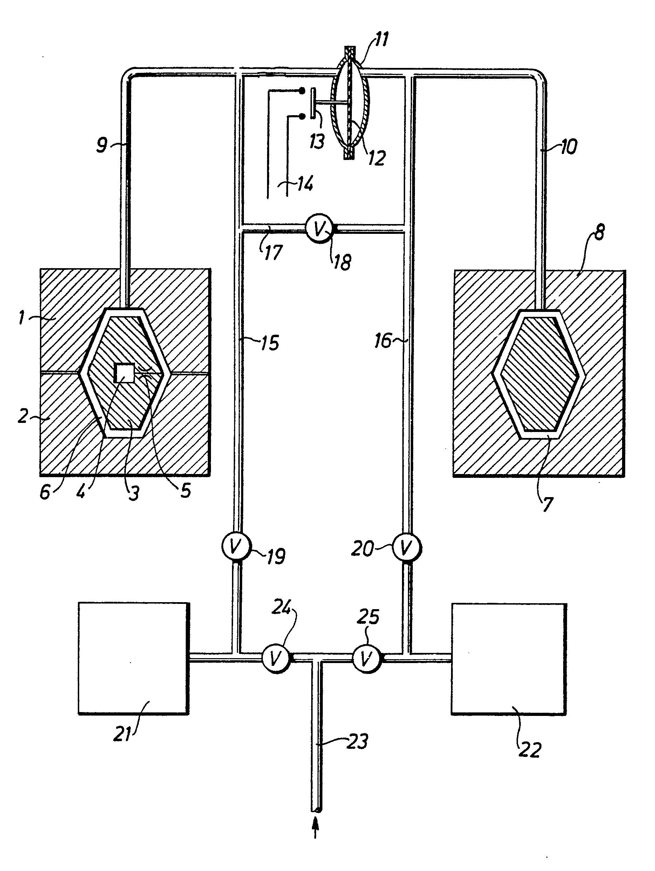

The invention will be described further below with reference to the attached drawing showing schematically a device for tightness testing in accordance with the inventive method. On the left hand side of the drawing, an test object 3 is placed in a two-part fixture 1, 2, said test object 3 having a internal cavity 4. Normally, this cavity must be gas tight towards the environment, but in practice, e.g. in case of serial production, small or large leaks will appear at some objects, indicated schematically by a throttling 5 on the drawing.

Between the outside of the object 3 and the internal walls of the fixture 1, 2, a space having a rather well-defined volume is defined, in the following being referred to as the test chamber 6. Of course the volume of the test chamber 6 depends on the outer size tolerances of the particular object 3, but these tolerances are supposed to have no influence on the test results.

To enable comparative measurements, a reference chamber 7 is formed in a body 8 (to the right hand side of the drawing), and the geometrical configuration as well as the volume of the chamber 7 correspond substantially to those of the test chamber 6. In the following, the chamber 7 is referred to as the reference chamber.

Via couplings (not shown) and conduits 9 and 10, respectively, or hoses, the test and reference chambers 6, 7 are each connected to an associated chamber of a differential pressure sensor 11 provided with a diaphragm, e.g. an inductive pressure sensor of known type. The drawing shows, however, a contact 13 mechanically connected to the diaphragm 12 and adapted to close an electric circuit, indicated at 14, when the diaphragm is deflected towards the left.

The conduits 9 and 10 are each connected to a conduit 15 and 16, respectively, between which a shunt 17 with a cut-off valve 18 is inserted. Each conduit 15, 16 is also provided with a cut-off valve 19 and 20, respectively, and is connected to an associated vessel 21 and 22, respectively, to which pressurized air can be supplied via a feeding conduit 23 and a cut-off valve 24 and 25, respectively.

The device operates in the following way:

An object 3 to be fluid tightness tested with respect to the presence or absence of a leak in an internal cavity 4 is placed into the fixture 1, 2. The valves 18, 19 and 20 are closed, whereas the valves 24 and 25 are opened so that the two vessels 21 and 22 are charged with pressurized air. Thereafter, the valves 24 and 25 are closed and the valves 19, 20 are opened. The pressurized air in the vessels 21, 22 will then be distributed, on the one hand, in the closed circuit constituted by the test chamber 6, the conduits 9, 15 and the vessel 21 and, on the other hand, in the closed circuit constituted by the reference chamber 7, the conduits 10, 16 and the vessel 22. In case these closed circuits are of equal size (or if the volume of the vessel 21 is related to the volume of the test chamber 6 in the same way as the volume of the vessel 22 is related to the volume of the reference chamber 7) the equalized positive pressures will be equal in the test chamber and in the reference chamber, provided that no large leak 5 exists. Since the pressures on both sides of the diaphragm 12 of the differential pressure sensor 11 are equal, no signal from the differential pressure sensor will be obtained. Thus, it can be established that no large leak exists between the outside of the object 3 and its cavity 4. If, on the other hand, such a leak really exists, the differential pressure sensor will give a signal indicating leakage.

If no large leak is found, the testing is continued by closing the valves 19 and 20 and momentarily opening the valve 18, so that exactly the same pressure prevails on both sides of the diaphragm 12 of the differential pressure sensor 11. The closing of the valve 18 is followed by a test with respect to a minor leak 5 in the object 3. During a predetermined measuring time (e.g. 5 seconds; however, the time period depends on the particular tightness requirements) the separated air circuits of the test and reference chambers 6 and 7 are left alone.

Even a very small keak 5 will now be detected by means of the differential pressure sensor 11, the diaphragm 12 of which is deflected (to the left on the drawing) as soon as the air pressure in the test chamber 6 is reduced, the reduction being caused by a leak flow into the internal cavity 4. When this testing step has been carried out as well, the object 3 can be regarded as fluid tight, and a new object is placed in the fixture 1, 2.

Instead of measuring a positive pressure, it is possible to use a negative pressure, in which case the vessels 21, 22 are initially connected to a vacuum pump via the conduit 23, so that a certain negative pressure is obtained in each vessel. The following operation may, however, be effected correspondingly as described above.

Furthermore, the vessels 21, 22 can be replaced by a piston-cylinder unit (not shown) having a well-defined piston stroke. During the coarse leak detection it is, in fact, sufficient to supply a well-defined air or gas quantity to the test chamber 6 and the reference chamber 7.

## Claims

1. A method for testing the fluid tightness of a test object (3) by comparative measurements between a test chamber (6), containing said test object or a part thereof, and a reference chamber (7), wherein in a first step the presence or absence of a large leak is detected by transferring predetermined gas quantities to the test chamber (6) and the reference chamber (7), and by determining whether or not a pressure change occurs arising from said large leak, and wherein in a second step the presence or absence of a minor leak is detected by differential pressure measurements between the two chambers over a predetermined time period, characterized in that the first step comprises simultaneously transferring corresponding gas quantities between, on the one hand, a first gas supply (21) and the test chamber (6) and, on the other hand, a separate second gas supply (22) and the reference chamber (7), and detecting any large leak by momentary differential pressure measurement between the two chambers (6, 7).

2. A method as set forth in claim 1, characterized in that, before said second step, the gas pressures in said test and reference chambers (6, 7) are equalized.

3. A method as set forth in claim 1 or 2, characterized in that as first and second gas supply devices vessels (21, 22) of like volumes are used and in that, before said first step, the same gas pressure is applied to these two vessels (21, 22), whereupon the latter are separated from each other.

## Patentansprüche

1. Verfahren zum Überprüfen der Fluid-Dichtigkeit eines Prüfobjekts (3) durch Vergleichsmessungen zwischen einer Prüfkammer (6), die das Prüfobjekt oder einen Teil hiervon enthält, und einer Bezugskammer (7), wobei in einem ersten Schritt die Anwesenheit oder Abwesenheit eines großen Lecks durch Überführung bestimmter Gasmengen zur Prüfkammer (6) und zur Bezugskammer (7) und durch Bestimmung, ob eine auf das große Leck zurückgehende Druckänderung auftritt oder nicht, festgestellt wird, und wobei in einem zweiten Schritt die Anwesenheit oder Abwesenheit eines kleinen Lecks durch Differenzdruckmessungen zwischen den beiden Kammern über eine bestimmte Zeitdauer hingeweg festgestellt wird, dadurch gekennzeichnet, daß der erste Schritt das gleichzeitige Überführen entsprechender Gasmengen zwischen einem ersten Gasvorrat (21) und der Prüfkammer (6) einerseits und zwischen einem gesonderten zweiten Gasvorrat (22) und der Bezugskammer (7) andererseits sowie das Feststellen eines großen Lecks durch momentane Differenzdruckmessung zwischen den beiden Kammern (6, 7) umfaßt.

2. Verfahren nach Anspruch 1, dadurch gekennzeichnet, daß vor dem zweiten Schritt die Gasdrücke in den Prüf- und Bezugskammern (6, 7) ausgeglichen werden.

3. Verfahren nach Anspruch 1 oder 2, dadurch gekennzeichnet, daß als erste und zweite Gasvorratseinrichtungen Gefäße (21, 22) von gleichen Volumina verwendet werden, und daß vor dem ersten Schritt der gleiche Gasdruck in diese beiden Gefäße (21, 22) eingebracht wird, worauf die letzteren voneinander getrennt werden.

**Revendications**

1. Procédé pour contrôler l'étanchéité d'un objet d'essai (3) par mesures comparatives entre une chambre d'essai (6), contenant ledit objet d'essai ou une de ses parties, et une chambre de référence (7), dans lequel à une première étape on décèle la présence ou l'absence de fuite importante en transférant des quantités de gaz déterminées à la chambre d'essai (6) et à la chambre de référence (7), et en déterminant s'il apparaît ou non une variation de pression découlant de ladite fuite importante, et à une seconde étape on décèle la présence ou l'absence d'une fuite mineure par mesures de pression différentielle entre les deux chambres opérées en un temps déterminé, caractérisé en ce que la première étape comporte le transfert simultané de quentités de gaz correspondantes entre, d'une part, une première souce de gaz (21) et la chambre d'essai (6) et, d'autre part, une seconde source de gaz distincte (22) et la chambre de référence (7), et la détection de toute fuite importante éventuelle par mesure de pression différentielle momentanée entre les deux chambres (6, 7).

2. Procédé selon la revendication 1, caractérisé en ce que, avant ladite seconde étape, on égalise les pressions de gaz régnant dans lesdites chambres d'essai et de référence (6, 7).

3. Procédé selon la revendication 1 ou 2, caractérisé en ce qu'on utilise comme premier et second dispositifs-sources de gaz des récipients (21, 22) de volumes semblables et en ce que, avant ladite première étape, on applique la même pression de gax à ces deux récipients (21, 22), après quoi on sépare ces derniers l'un de l'autre.